# EUROPEAN PATENT SPECIFICATION

(11) **EP 0 885 785 B1**
(45) Date of publication and mention of the grant of the patent: **02.05.2003**
(21) Application number: 98201593.5
(22) Date of filing: 14.05.1998
(51) Int. Cl.: B60R 21/20

(54) **Door air bag mounting arrangement**
Airbag- Montageanordnung an einer Tür
Agencement d'un coussin de sécurité sur une porte

(30) Priority: 20.06.1997 GB 9712914
(43) Date of publication of application: 23.12.1998
(73) Proprietor: Delphi Automotive Systems Deutschland GmbH, D-42369 Wuppertal (DE)
(72) Inventor: Dancasius, Michael, 42105 Wuppertal (DE); Borowski, Joachim, 42857 Remscheid (DE)
(74) Representative: Denton, Michael John

(56) References cited:
- DE-A- 4 209 944
- DE-A- 19 511 511
- US-A- 5 437 471
- PATENT ABSTRACTS OF JAPAN vol. 017, no. 222 (M-1404), 7 May 1993 & JP 04 356245 A (MAZDA MOTOR CORP), 9 December 1992
- PATENT ABSTRACTS OF JAPAN vol. 017, no. 248 (M-1411), 18 May 1993 & JP 04 368250 A (TOYOTA MOTOR CORP), 21 December 1992
- PATENT ABSTRACTS OF JAPAN vol. 095, no. 002, 31 March 1995 & JP 06 305392 A (TOYOTA MOTOR CORP), 1 November 1994

## Description

### Technical Field

The present invention relates to an arrangement for mounting an air bag device in a door of a motor vehicle.

### Background of the Invention

It is known to mount an air bag device in a door of a motor vehicle. The air bag of the air bag device is inflated during an impact to protect a vehicle occupant sitting adjacent the door. In this known arrangement, the air bag and the inflator for the air bag are mounted inside a housing and a splitable and/or pivotable cover covers the air bag. The housing is secured to the inner panel of the door. The housing is generally deep drawn from sheet metal. This arrangement has disadvantages in terms of cost and weight, and provides no structural support for the door. DE-A-4209944 discloses an arrangement in accordance with the preamble of Claim 1. JP-A-06 305392 discloses a structure allowing exhausting of inflator gas.

### Summary of the Invention

It is an object of the present invention to overcome the above mentioned disadvantages.

An arrangement for mounting an air bag device in a door of a motor vehicle in accordance with the present invention is characterised over DE-A-4209944 by the features specified in the characterising portion of Claim 1.

In the present invention, the air bag device becomes an integral part of a member which extends diagonally across an opening in the inner panel of the door. The provides advantages in terms of cost and weight, and provides additional structural strength for the door.

### Brief Description of the Drawings

The present invention will now be described, by way of example, with reference to the accompanying drawings, in which:-
Figure 1 is a side view of a door of a motor vehicle having an air bag device mounted therein in an arrangement in accordance with the present invention;
Figure 2 is an enlarged view of the area labelled II in Figure 1;
Figure 3 is a cross-sectional view on the line III-III of Figure 2;
Figure 4 is a cross-sectional view which is similar to that of Figure 2 of a modified arrangement in accordance with the present invention;
Figure 5 is a cross-sectional view which is similar to that of Figure 2 of a further modified arrangement in accordance with the present invention;
Figure 6 is a cross-sectional view which is similar to that of Figure 2 of a still further modified arrangement in accordance with the present invention; and
Figure 7 is a cross-sectional view which is similar to that of Figure 2 of another modified arrangement in accordance with the present invention; and
Figure 8 is a cross-sectional view which is similar to that of Figure 2 of another further modified arrangement in accordance with the present invention.

### Description of the Preferred Embodiment

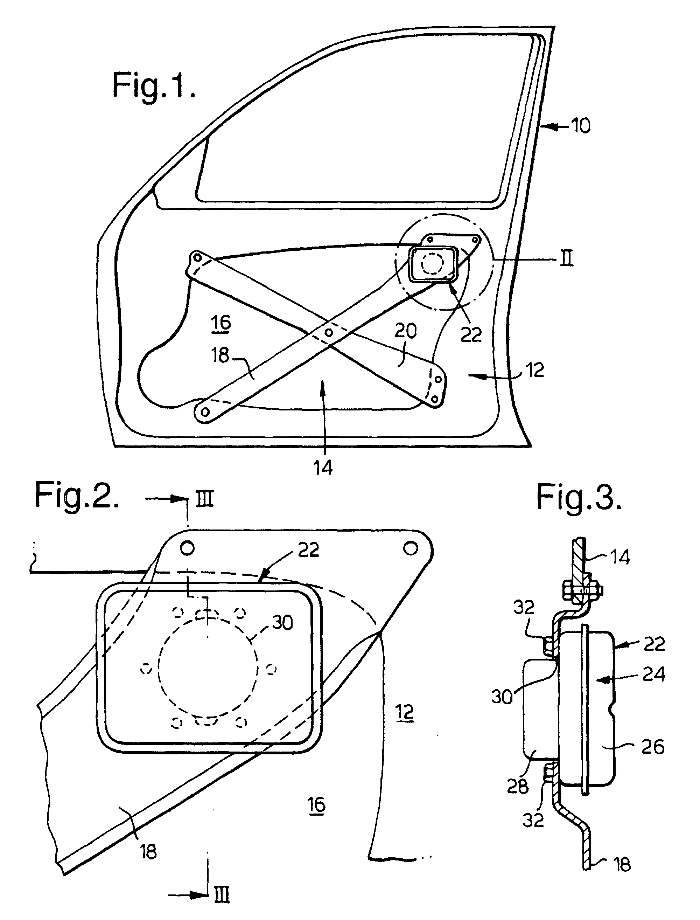

Referring to Figures 1 to 3, a door 10 of a motor vehicle comprises an inner panel 12 and an outer panel 14, with an opening 16 being formed in the inner panel. The inner panel 12 is strengthened by a pair of cross members 18,20 which extend (preferably diagonally and substantially diametrically) across the opening 16, and which are secured to the inner panel 12 by any suitable means. The cross members 18,20 are preferably stamped from sheet metal. An air bag device 22 is mounted on one of the cross members 18 in such a position as to protect a vehicle occupant during an impact on the motor vehicle.

The air bag device 22 comprises a substantially rigid plastics housing 24 having a front portion 26 which can split and/or pivot away, in any suitable manner, from a rear portion 28 during inflation of an air bag positioned inside the housing. The rear portion 28 of the housing 24 supports an inflator for the air bag. The rear portion 28 extends through an aperture 30 in the cross member 18, and the housing 24 is secured to the cross member, preferably by way of screws and nuts 32. With this arrangement, the housing 24 of the air bag device 22 becomes an integral part of the cross member 18 which provides structural strength for the door 10. The use of plastics material for the housing 24 rather than metal reduces the weight and cost of the housing. The cross member 18 is shaped to interact with the air bag device 22 to provide support for the air bag device against the forces generated during inflation of the air bag.

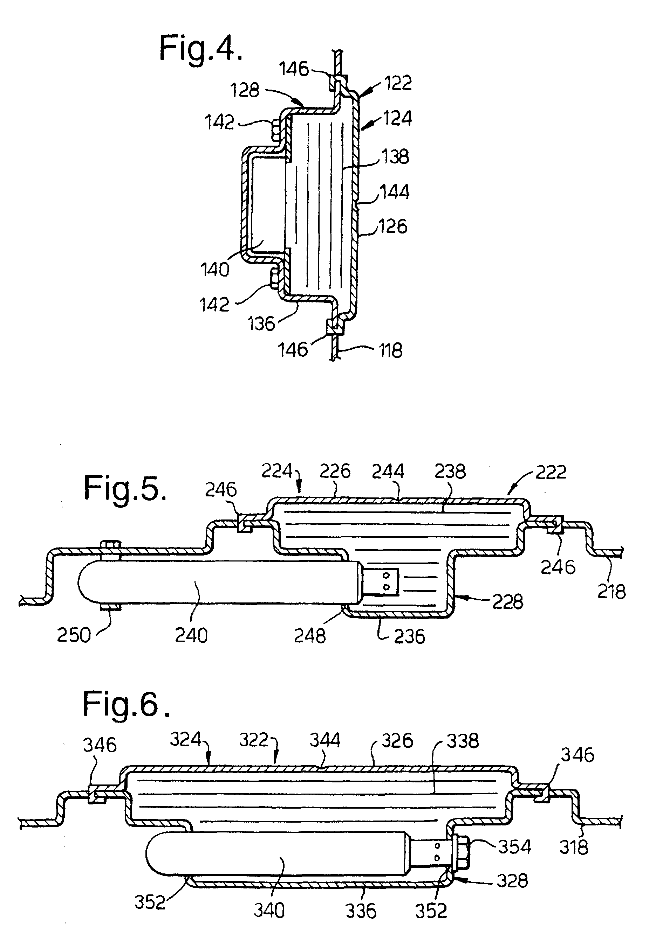

The above described arrangement is modified in accordance with the present invention as shown in Figure 4. In this modified arrangement, like parts have been given the prefix 100. The cross member 118 has a portion 136 which is shaped to form the rear part 128 of the housing 124 of the air bag device 122. The air bag 138 and the inflator 140 of the air bag device 122 are positioned in the portion 136. The air bag 138 is secured to the inflator 140 in any suitable manner, and the inflator 140 is secured to the cross member 118 by any suitable means, such as screws and nuts 142. The front portion 126 of the housing 124 covers the air bag 138. The front portion 126 is preferably of plastics material, and is secured to the cross member 118. The front portion 126 has a weakened area 144 and pivot points 146 (where a portion of the cover portion 126 passes through a hole in the cross member 118) which allow the front portion to split and then pivot relative to the cross member 118 on inflation of the air bag 138. With a portion of the cross member defining part of the housing for the air bag device 122, further savings can be achieved in terms of cost and weight.

The arrangement shown in Figure 5 is a modification of the arrangement of Figure 4 in accordance with the present invention, with like parts being given the prefix 200. In the arrangement of Figure 5, the inflator 240 is secured to the opposed side of the cross member 218 to the front portion 226 of the housing 224. The inflator 240 extends through an aperture 248 in the portion 236 of the cross member 218 defining the rear portion 228 of the housing 224, and is connected with the air bag 238. A band clamp 250 is used to secure the inflator 240 to the cross member 218.

The arrangement shown in Figure 6 is an alternative modification of the arrangement of Figure 4 in accordance with the present invention, with like parts being given the prefix 300. In the arrangement of Figure 6, the inflator 340 extends between a pair of apertures 352 formed in the portion 336 of the cross member 318 defining the rear portion 328 of the housing 324, and is secured at one end by a nut 354.

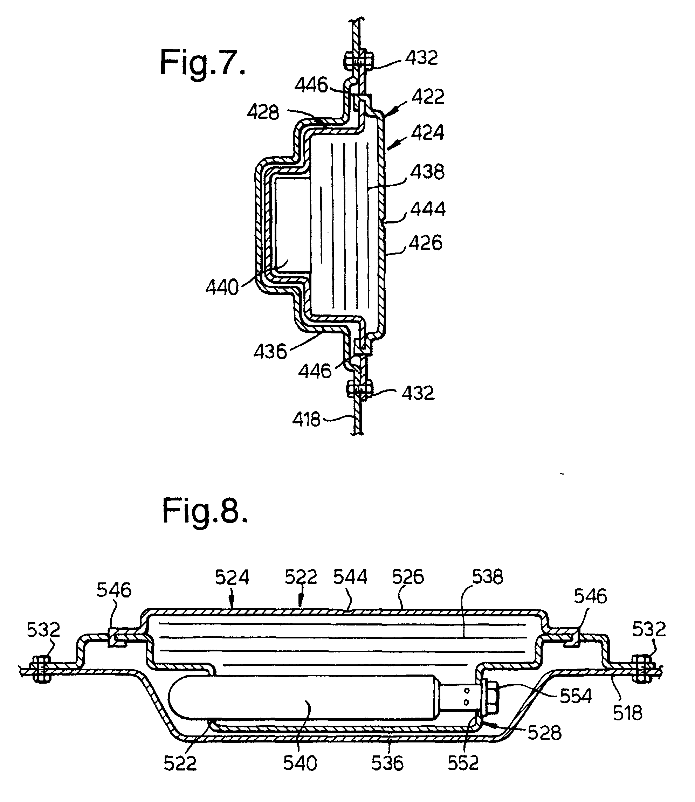

The arrangement shown in Figure 7 is a modification of the arrangement of Figure 4 in accordance with the present invention, with like parts being given the prefix 400. In the arrangement of Figure 7, the cross member 418 has a portion 436 which is shaped to correspond to the shape of the rear portion 428 of the housing 424 of the air bag device 422. The air bag device 422 is secured to the cross member 418 by any suitable means, such as screws and nuts 432, with the rear portion 428 positioned in the portion 436 of the cross member. The air bag 438 and the inflator 440 of the air bag device 422 are positioned inside the plastics housing 424. The air bag 438 is secured to the inflator 440 in any suitable manner, and the inflator 440 is secured to the rear portion 428 of the housing 424 by any suitable means. The front portion 426 of the housing 424 covers the air bag 438 and has a weakened area 444 and pivot points 446 (where a portion of the cover portion 426 passes through a hole in the rear portion 428) which allow the front portion to break and then pivot relative to the cross member 418 on inflation of the air bag 438. With this arrangement, the housing 424 of the air bag device 422 becomes an integral part of the cross member 418 which provides structural strength for the door. The use of plastics material for the housing 424 rather than metal reduces the weight and cost of the housing. The cross member 418 is shaped to interact with the air bag device 422 to provide support for the air bag device against the forces generated during inflation of the air bag 438.

The arrangement shown in Figure 8 is a modification of the arrangement of Figure 6 in accordance with the present invention, with like parts being given the prefix 500. In the arrangement of Figure 8, the cross member 518 has a portion 536 which is shaped to correspond to the shape of the rear portion 528 of the plastics housing 524 of the air bag device 522. The air bag device 522 is secured to the cross member 518 by any suitable means, such as screws and nuts 532, with the rear portion 528 positioned in the portion 536 of the cross member. The air bag 538 and the inflator 540 of the air bag device 522 are positioned inside the plastics housing 524. The air bag 538 is secured to the inflator 540 in any suitable manner, and the inflator 540 extends between a pair of apertures 552 formed in the rear portion 528 of the housing 524, and is secured at one end by a nut 554.

In the above described arrangements, the pivot points 146-546 may be replaced by fixed connections such as rivets, or snap fitting tabs, with the front portion 126-526 of the housing 124-524 splitting and distorting on inflation of the air bag 138-538.

## Claims

1. An arrangement for mounting an air bag device (22) in a door (10) of a motor vehicle, the door having an inner panel (12) with an opening (14) therein, the arrangement comprising a cross member (18) securable to the inner panel to extend across the opening; and an air bag device (22) including an air bag, and an inflator connected to the air bag, **characterised in that** the air bag device includes a housing (24); **in that** the air bag is positioned inside the housing; and **in that** the housing has a rear portion (28) integrally formed by, or integrally mounted on, the cross member.

2. An arrangement as claimed in Claim 1, wherein the cross member (18) is securable to extend substantially diametrically across the opening (14).

3. An arrangement as claimed in Claim 1 or Claim 2, wherein the housing (24) is moulded from plastics material, and the rear portion (28) is secured to, and extends through an aperture (30) in, the cross member (18).

4. An arrangement as claimed in Claim 1 or Claim 2, wherein the housing (424) is moulded from plastics material, and the cross member (418) has a portion (436) which substantially corresponds in shape to the shape of the rear portion (428) of the housing; and wherein the rear portion is secured to the cross member with the rear portion positioned in the portion of the cross member.

5. An arrangement as claimed in Claim 4, wherein the inflator (540) extends between and through a pair of aligned apertures (552) in the rear portion (528) of the housing (524), and is secured in the aligned apertures.

6. An arrangement as claimed in Claim 1 or Claim 2, wherein the cross member (218) has a portion (236) which defines the rear portion (228) of the housing (224), the housing having a front portion (226) which covers the air bag (238) positioned in the portion of the cross member.

7. An arrangement as claimed in Claim 6, wherein the inflator (240) is mounted on the cross member (218) outside of the portion (236) in the cross member and extends through an aperture (248) in the portion of the cross member to connect with the air bag (238).

8. An arrangement as claimed in Claim 6, wherein the inflator (340) extends between and through a pair of aligned apertures (352) in the portion (336) of the cross member (318), and is secured in the aligned apertures.

9. An arrangement as claimed in any one of Claims 1 to 8, wherein the cross member (18) is stamped from sheet metal.

## Patentansprüche

1. Anordnung zum Montieren einer Airbag-Vorrichtung (22) in einer Tür (10) eines Kraftfahrzeuges, wobei die Tür eine innere Tafel (12) mit einer Öffnung (14) darin besitzt, und die Anordnung einen Querträger (18), der an der inneren Tafel befestigt werden kann, so dass er sich über die Öffnung hinweg erstreckt; und eine Airbag-Vorrichtung (22) mit einem Airbag und einer an den Airbag angeschlossenen Aufblasvorrichtung umfasst, **dadurch gekennzeichnet, dass** die Airbag-Vorrichtung ein Gehäuse (24) umfasst; dass der Airbag im Inneren des Gehäuses angeordnet ist; und dass das Gehäuse einen hinteren Abschnitt (28) besitzt, der integral von dem Querträger gebildet oder integral an diesem montiert ist.

2. Anordnung nach Anspruch 1, worin der Querträger (18) so befestigt werden kann, dass er sich im Wesentlichen diametral über die Öffnung (14) hinweg erstreckt.

3. Anordnung nach Anspruch 1 oder 2, worin das Gehäuse (24) aus Kunststoffmaterial geformt ist, und der hintere Abschnitt (28) an dem Querträger (18) befestigt ist, und sich durch eine Öffnung (30) in diesem erstreckt.

4. Anordnung nach Anspruch 1 oder 2, worin das Gehäuse (424) aus Kunststoffmaterial geformt ist, und der Querträger (418) einen Abschnitt (436) besitzt, der in seiner Form im Wesentlichen mit der Form des hinteren Abschnittes (428) des Gehäuses übereinstimmt; und worin der hintere Abschnitt an dem Querträger befestigt ist, wobei der hintere Abschnitt in dem Abschnitt des Querträgers angeordnet ist.

5. Anordnung nach Anspruch 4, worin die Aufblasvorrichtung (540) sich zwischen einem und durch ein Paar von ausgerichteten Öffnungen (552) in dem hinteren Abschnitt (528) des Gehäuses (524) erstreckt, und in den ausgerichteten Öffnungen befestigt ist.

6. Anordnung nach Anspruch 1 oder 2, worin der Querträger (218) einen Abschnitt (236) besitzt, welcher den hinteren Abschnitt (228) des Gehäuses (224) definiert, wobei das Gehäuse einen vorderen Abschnitt (226) besitzt, der den in dem Abschnitt des Querträgers angeordneten Airbag (238) bedeckt.

7. Anordnung nach Anspruch 6, worin die Aufblasvorrichtung (240) an dem Querträger (218) außerhalb des Abschnittes (236) in dem Querträger montiert ist und sich durch eine Öffnung (248) in dem Abschnitt des Querträgers erstreckt, um sich mit dem Airbag (238) zu verbinden.

8. Anordnung nach Anspruch 6, worin die Aufblasvorrichtung (340) sich zwischen einem und durch ein Paar von ausgerichteten Öffnungen (352) in dem Abschnitt (336) des Querträgers (318) hindurch erstreckt, und in den ausgerichteten Öffnungen befestigt ist.

9. Anordnung nach einem der Ansprüche 1 bis 8, worin der Querträger (18) aus Metallblech gestanzt ist.

## Revendications

1. Système permettant de monter un dispositif à type coussin de sécurité (22) dans la portière (10) d'un véhicule à moteur, ladite portière comprenant un panneau interne (12) comportant une ouverture (14), lequel système comprend un élément transversal (18) qui vient se fixer au panneau interne et qui s'étend en travers de l'ouverture, et un dispositif à coussin de sécurité (22) qui comprend un coussin de sécurité et un gonfleur connecté audit coussin de sécurité, ledit système étant **caractérisé en ce que** le dispositif à coussin de sécurité comprend un boîtier (24), **en ce que** le coussin de sécurité est disposé dans le boîtier, et **en ce que** le boîtier possède une partie arrière (28) qui est formée de façon intégrale par l'élément transversal ou montée de façon intégrale sur celui-ci.

2. Système selon la revendication 1, dans lequel l'élément transversal (18) vient se fixer de manière à s'étendre essentiellement diamétralement en travers de l'ouverture (14).

3. Système, tel que revendiqué dans la revendication 1 ou la revendication 2, dans lequel le boîtier (24) est moulé à partir d'un matériau plastique, tandis que la partie arrière (28) est fixée à l'élément transversal (18) et passe par une ouverture (30) pratiquée dans ledit élément transversal (18).

4. Système selon la revendication 1 ou la revendication 2, dans lequel le boîtier (424) est moulé à partir d'un matériau plastique, tandis que l'élément transversal (418) possède une partie (436) dont la forme correspond essentiellement à la forme de la partie arrière (428) du boîtier, et dans lequel la partie arrière est fixée à l'élément transversal de sorte qu'elle soit disposée dans la partie de l'élément transversal.

5. Système selon la revendication 4, dans lequel le gonfleur (540) s'étend entre et à travers deux ouvertures alignées (552) formées dans la partie arrière (528) du boîtier (524), et est fixé dans les ouvertures alignées.

6. Système selon la revendication 1 ou la revendication 2, dans lequel l'élément transversal (218) comprend une partie (236) qui définit la partie arrière (228) du boîtier (224), lequel boîtier comprend une partie avant (226) qui recouvre le coussin de sécurité (238) disposé dans la partie de l'élément transversal.

7. Système selon la revendication 6, dans lequel le gonfleur (240) est monté sur l'élément transversal (218) hors de la partie (236) de l'élément transversal, et s'étend à travers une ouverture (248) formée dans la partie de l'élément transversal de façon à se connecter au coussin de sécurité (238).

8. Système selon la revendication 6, dans lequel le gonfleur (340) s'étend entre et à travers deux ouvertures alignées (352) formées dans la partie (336) de l'élément transversal (318), et est fixé dans les ouvertures alignées.

9. Système selon l'une quelconque des revendications 1 à 8, dans lequel l'élément transversal (18) est embouti à partir d'une tôle métallique.
